# DEMANDE DE BREVET EUROPEEN

(11) **EP 1 688 285 A2**
(43) Date de publication de la demande: **09.08.2006**
(21) Numéro de dépôt: 06101232.4
(22) Date de dépôt: 02.02.2006
(51) Int. Cl.: B60J 1/16

(54) **Fenêtre coulissante pour véhicule automobile, porte, véhicule automobile et procédé de montage correspondants.**

(30) Priorité: 04.02.2005 FR 0501166
(71) Demandeur: WAGON SAS, 79302 Bressuire Cedex (FR)
(72) Inventeur: Fourel, Pascal, 35400 Saint Malo (FR)
(74) Mandataire: Bioret, Ludovic

(57) **Abrégé**

L'invention concerne une fenêtre pour véhicule automobile, comprenant au moins un panneau mobile (13) monté coulissant de façon à pouvoir obturer ou libérer une ouverture. Selon l'invention,une telle fenêtre comprend des moyens anti-basculement du panneau mobile (13) lorsque ce dernier est en position extrême, comprenant au moins un élément d'appui (23) solidaire du panneau mobile (13), prévu pour venir en appui sur au moins un élément de support (24) solidaire d'un élément fixe du véhicule, dans la position ouverte extrême.

## Description

Le domaine de l'invention est celui des véhicules automobiles, et en particulier des ouvertures, ou des baies, ménagées dans ces véhicules. Plus précisément, l'invention concerne les fenêtres pour véhicules automobiles, montées coulissantes par rapport à un panneau fixe, à la carrosserie et/ou à une porte de véhicule.

On connaît déjà de nombreux systèmes de réalisation de fenêtres équipées d'au moins un panneau mobile. Ainsi, de nombreux véhicules sont équipés de vitres de porte coulissant verticalement, pour pénétrer à l'intérieur du panneau de porte.

Une autre technique a également été proposée, selon laquelle un panneau mobile coulisse horizontalement pour dégager une ouverture. Une telle technique est par exemple divulguée dans les brevets EP 0 778 168 et EP 0 956 987. Selon cette technique, développée par le titulaire de la présente demande, l'ouverture est ménagée dans un panneau fixe, par exemple en verre. En position fermée, le panneau mobile affleure avec le panneau fixe. Il se décale vers l'intérieur du véhicule pour coulisser et libérer l'ouverture.

Selon d'autres techniques, le panneau mobile peut coulisser vers l'extérieur du véhicule. Selon les cas, le panneau mobile peut obturer simplement une ouverture ménagée dans un ensemble d'obturation, comme présenté dans les documents de brevets précités, ou obturer l'ensemble de la baie ménagée dans la carrosserie ou la porte du véhicule.

Classiquement, des rails de coulissement sont montés sur une partie fixe (le panneau fixe et/ou la carrosserie et/ou la structure de la porte). Des éléments coulissants, tels que des patins, sont solidaires du panneau mobile, et sont guidés en coulissement par ces rails. Ceux-ci sont adaptés, de préférence, pour assurer non seulement le déplacement de coulissement, mais également le déplacement permettant l'enchâssement du panneau mobile de façon qu'en position fermée, il affleure avec le bord de la partie fixe.

Cette technique connue est relativement simple et efficace. Cependant, elle présente un inconvénient important, en position ouverte. En effet, les rails de coulissement ne peuvent pas s'étendre fortement au-delà de l'ouverture, notamment lorsque celle-ci est ménagée dans une porte. Le panneau mobile, ou vitre, se trouve donc en porte-à-faux, au moins lorsqu'il est en position ouverte maximale. Il a alors tendance à basculer légèrement, sous l'effet de son poids.

Outre un problème esthétique, donnant une impression de mauvaise qualité et de détérioration du produit, cela risque de bloquer le coulissement (les patins ne sont plus parfaitement alignés avec les rails). Le coulissement est donc rendu plus difficile pour l'utilisateur. En outre, dans des cas extrêmes, cette situation peut entraîner la détérioration des moyens assurant la mobilité, et le cas échéant empêcher de refermer correctement la vitre.

Pour éviter ce problème, on choisit généralement de limiter la plage de coulissement, ce qui entraîne que l'ouverture maximale reste limitée, par rapport à la surface de la baie.

L'invention a notamment pour objectif de pallier ces différents inconvénients de l'art antérieur.

Plus précisément, un objectif de l'invention est de fournir une technique de fenêtre coulissante de véhicule qui permette d'obtenir une ouverture importante, c'est-à-dire un décalage en coulissement important, sans risque de détérioration ou de blocage en position ouverte.

En d'autres termes, un objectif de l'invention est de supprimer, ou à tout le moins limiter, les inconvénients dus au porte-à-faux du panneau mobile, lorsqu'il est en position ouverte.

L'invention a également pour objectif de fournir une telle technique, qui soit simple et peu coûteuse à réaliser et à mettre en oeuvre, et notamment qui ne nécessite pas de réglage important.

Encore un autre objectif de l'invention est de fournir une telle technique, permettant de maximiser la surface dégagée par le panneau mobile, en position ouverte extrême.

Ces objectifs, ainsi que d'autres qui apparaîtront par la suite, sont atteints à l'aide d'une fenêtre pour véhicule automobile, comprenant au moins un panneau mobile monté coulissant de façon à pouvoir obturer ou libérer ladite ouverture. Selon l'invention, cette fenêtre comprend des moyens anti-basculement dudit panneau mobile lorsque ce dernier est en position extrême, comprenant au moins un élément d'appui solidaire dudit panneau mobile, prévu pour venir en appui sur au moins un élément de support solidaire d'un élément fixe dudit véhicule, dans ladite position ouverte extrême.

On lutte ainsi efficacement contre les effets de porte-à-faux, et les problèmes esthétiques et techniques correspondants.

Il faut bien sûr interpréter la notion d'élément fixe mentionné ci-dessus comme fixe par rapport au déplacement du panneau mobile. L'élément fixe peut bien sûr être une porte, ou être solidaire d'une porte (elle-même mobile par rapport à la structure du véhicule).

De façon avantageuse, ledit élément d'appui s'étend sensiblement parallèlement à l'axe de coulissement dudit panneau mobile.

Préférentiellement, lorsque deux rails de coulissement, un rail supérieur et un rail inférieur, sont prévus, ledit élément de support s'étend sensiblement dans le prolongement dudit rail inférieur.

Selon une caractéristique avantageuse de l'invention, ledit élément d'appui et/ou ledit élément de support comprend un bord d'attaque profilé de façon à compenser un jeu éventuel, au moment ou ledit élément d'appui et ledit élément de support viennent en contact.

Notamment, ledit bord d'attaque peut présenter un profil biseauté ou incurvé.

De façon préférentielle, la fenêtre de l'invention comprend un cadre de liaison avec ledit véhicule, et ledit élément de support est une extension dudit cadre de liaison.

Cela permet une fabrication et un montage aisés, et un alignement correct de l'élément de support.

Avantageusement, ledit élément de support forme une glissière pour ledit élément d'appui.

Selon un mode de réalisation préférentielle de l'invention, la fenêtre est affleurante avec la carrosserie dudit véhicule, en position fermée, et décalée vers l'extérieur dudit véhicule pour coulisser et prendre ladite position ouverte extrême.

L'invention concerne également une porte de véhicule automobile, comprenant une fenêtre telle que décrite ci-dessus, ainsi qu'un véhicule automobile comprenant au moins une telle fenêtre.

L'invention concerne encore un procédé de montage d'une telle fenêtre sur un véhicule automobile. Ce procédé comprend notamment les étapes suivantes :
- assemblage de ladite fenêtre, comprenant la solidarisation dudit élément d'appui et d'un cadre audit panneau mobile ;
- montage de ladite fenêtre sur une baie dudit véhicule, par solidarisation dudit cadre audit véhicule.

Préférentiellement, ce procédé comprend également une étape de solidarisation d'au moins une extrémité dudit élément de support à un élément de la carrosserie ou d'une porte dudit véhicule.

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- les figures 1a et 1b présentent une porte de véhicule équipée d'une fenêtre selon l'invention, respectivement en position fermée et en position ouverte ;
- les figures 2a et 2b illustrent plus précisément les éléments d'appui et de support selon l'invention, respectivement en position fermée et en position ouverte ;
- la figure 3 présente plus précisément une forme préférentielle des éléments d'appui et de support des figures 2a et 2b ;
- la figure 4 est un organigramme simplifié présentant le procédé de montage sur un véhicule d'une fenêtre selon l'invention.

Le mode de réalisation décrit ci-après concerne plus précisément une porte de véhicule équipée d'un panneau mobile en coulissement. Comme déjà mentionné, l'approche de l'invention peut également être mise en oeuvre sur un panneau de carrosserie fixe, ou encore sur une baie du type de celle décrite dans les documents de brevet précités, dans laquelle le panneau mobile est monté sur un panneau fixe, lui-même rapporté sur un véhicule.

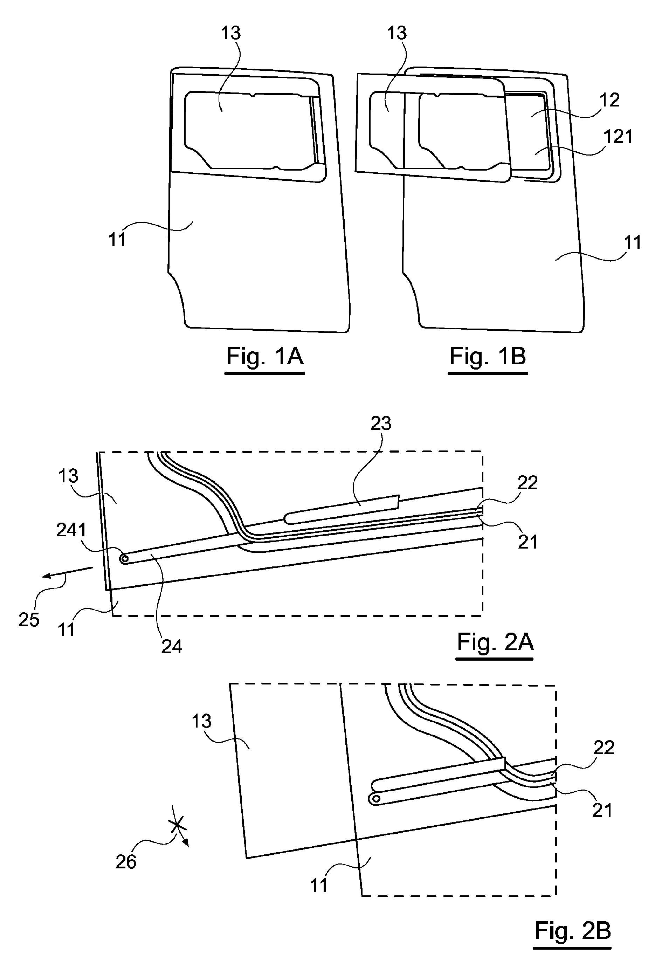

Les figures 1a et 1b présentent donc une porte de véhicule selon l'invention, respectivement en position fermée et en position ouverte.

Le panneau de porte 11 présente une ouverture 12, ou baie, ménagée dans sa partie supérieure.

Un panneau vitré (en verre ou en matière plastique) 13 est monté de façon à coulisser pour libérer l'ouverture 12.

Sur la figure 1a, en position fermée, le panneau vitré 13 se trouve dans le plan du panneau de porte 11, pour présenter un aspect affleurant.

Pour passer en position ouverte (figure 1b) le panneau vitré 13 est tout d'abord légèrement décalé vers l'extérieur pour s'écarter du plan du panneau 11, puis peut ensuite coulisser, pour libérer une partie 121 de l'ouverture 12. On comprend, sur la figure 2b, que la partie gauche du panneau 13 n'est pas maintenue par les rails de coulissement, et a donc généralement tendance à basculer sous l'effet du poids du panneau 13, induisant un porte-à-faux. C'est ce problème que l'invention résout.

D'une façon classique en soi, le panneau mobile 13 est équipé de patins de coulissement, et d'une poignée permettant d'assurer le verrouillage et le déverrouillage, et de contrôler le coulissement. Un cadre est solidarisé au panneau mobile 13, par exemple par collage, sur la face intérieure du panneau. Un joint d'étanchéité est assemblé sur ce cadre. L'ensemble est ensuite collé, ou solidarisé d'une autre façon, au panneau de porte 11.

De la sérigraphie 31 peut être déposée sur certains bords du panneau mobile, pour dissimuler au moins une partie des éléments fonctionnels.

Les figures 2a et 2b présentent le coin inférieur gauche du panneau mobile, respectivement en position fermée et en position ouverte.

On distingue sur ces figures le cadre 21, portant le joint d'étanchéité 22.

Selon l'invention, on a rapporté, par exemple par collage, sur la face intérieure du panneau mobile 13, un élément d'appui 23, également appelé ski.

Un élément complémentaire de support 24, ou glissière, est prévu. Dans le mode de réalisation illustré, il s'agit d'une extension du cadre 21, par ailleurs solidarisé au panneau de porte 11, au moins par l'intermédiaire d'une fixation 241. Cet élément de support peut également être soudé, collé, riveté...

On note que l'ouverture 12 a une forme particulière au niveau de ce coin inférieur gauche, de façon à libérer la place suffisante pour recevoir cet élément 24.

Lorsqu'on ouvre le panneau mobile 13, celui-ci se déplace dans le sens de la flèche 25, pour venir dans la position illustrée en figure 2b. L'élément d'appui 23 se trouve alors appuyé sur l'élément de support 24, empêchant le basculement dû au porte-à-faux illustré par la flèche 26.

On obtient ainsi, de façon simple et efficace, des moyens anti-basculement.

Ainsi, à l'ouverture de la glace, celle-ci louvoie puis coulisse par l'intermédiaire des patins de coulissement, vers l'extérieur et l'arrière du véhicule. Le mouvement de louvoiement permet de décompresser le joint. Si l'utilisateur souhaite augmenter l'ouverture, il actionne la poignée pour déverrouiller le système, puis tire la vitre vers l'arrière.

La vitre est alors guidée à la fois par les patins de guidage, de façon classique, et par le ski 23. Tous les patins coulissent selon la trajectoire imposée par les rails du cadre. Au relâchement de la poignée, la vitre se verrouille. Le principe de verrouillage actionné par la poignée peut être par exemple du type pêne, ou du type à frottement.

Le ski 23 vient maintenir le panneau mobile en partie arrière par l'intermédiaire de l'élément de support, ou glissière, 24, lorsque l'ouverture devient importante. Ces moyens n'interviennent qu'en cas de position d'ouverture maximale, ou à tout le moins dépassant un seuil d'ouverture prédéterminé.

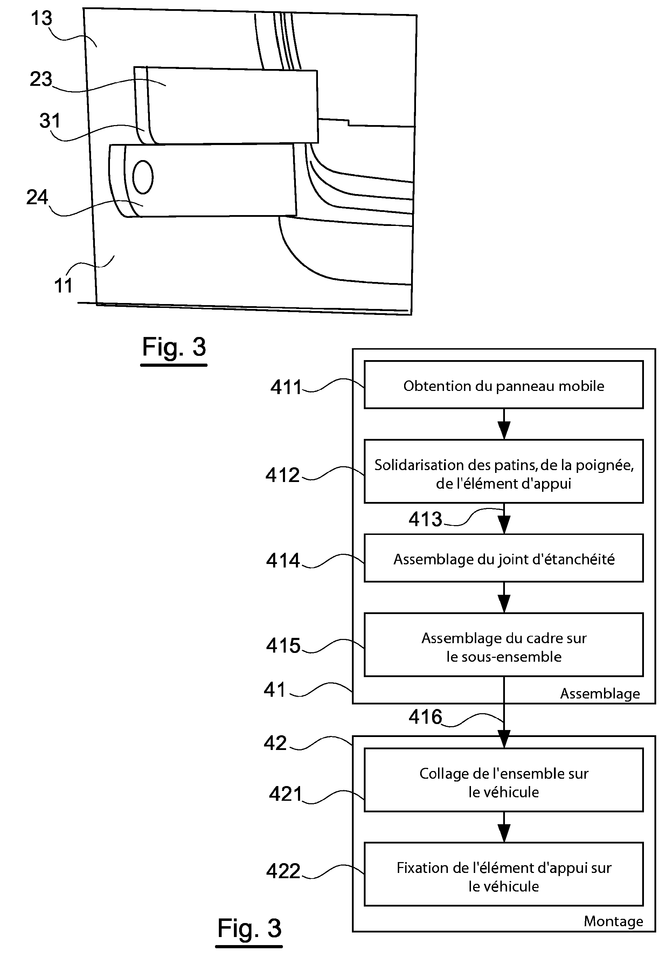

Comme illustré en figure 3, l'élément d'appui 23 présente un bord d'attaque 31 présentant une forme arrondie (d'où le nom de ski) qui facilite la coopération avec l'élément de support 24, lorsque les deux pièces entrent en contact. En effet, du fait des jeux éventuels, et d'un possible début de porte-à-faux, il est difficile de garantir le parfait alignement des éléments 23 et 24. Cette surface arrondie 31 permet de compenser ces jeux et de guider convenablement l'élément d'appui 23 sur l'élément de support 24. Celui-ci peut également avoir un bord d'attaque adapté. Par ailleurs, le bord arrondi peut être remplacé par un autre profil, par exemple biseauté.

L'élément de support 24, et/ou l'élément d'appui 23, peuvent en outre être équipés de moyens assurant le guidage et/ou le maintien dans le plan du panneau mobile, par exemple sous la forme d'une nervure, ou d'une rainure. On peut également prévoir des revêtements facilitant le coulissement, ainsi que des butées, lorsque l'ouverture maximale est atteinte.

La figure 4 présente un exemple de procédé de réalisation et de montage d'une fenêtre selon l'invention.

On distingue deux parties :
- une partie 41 d'assemblage, réalisée par exemple chez un équipementier, visant à fournir un ensemble de fenêtre complet ;
- une partie 42 de montage, mise en oeuvre chez le constructeur automobile.

L'assemblage 41 se fait de la façon suivante :
- étape 411 : on obtient d'abord une vitre, panneau mobile ;
- étape 412 : on monte sur cette vitre, par exemple par collage, clippage, vissage, ou tout autre manière adéquate, des patins de coulissement, une poignée, et le ski ou élément d'appui, pour obtenir un sous-ensemble 413 ;
- étape 414 : on assemble le joint d'étanchéité ;
- étape 415 : on assemble le cadre sur le sous-ensemble 413 pour obtenir un ensemble de fenêtre 416, prêt à être monté.

C'est cet ensemble de fenêtre 416 qui est livré au constructeur, qui n'a plus qu'à le monter sur le véhicule. Ce montage 42 comprend :
- étape 421 : le collage de l'ensemble de fenêtre sur la carrosserie, par l'intermédiaire cadre. Le collage peut bien sûr être remplacé par toute méthode de fixation adéquate ;
- étape 422 : fixation de l'élément d'appui, glissière, sur la carrosserie.

On obtient ainsi une porte de véhicule équipée d'un panneau mobile coulissant, permettant d'assurer un clair de baie important, avec une ouverture optimisée.

Comme déjà indiqué, la technique de l'invention ne se limite pas aux portes de véhicule, mais peut être mise en oeuvre dans tous les cas où un panneau coulissant est soumis à un porte-à-faux.

Par ailleurs, bien sûr, de nombreuses variantes peuvent être envisagées, dans la forme et la mise en oeuvre des moyens anti-basculement. Ainsi, par exemple, les moyens d'appui pourraient être remplacés par une série d'éléments, par exemple circulaire, par exemple pouvant venir rouler sur l'élément de support. De la même façon, l'élément de support pourrait être réalisé en plusieurs parties. Il n'est pas, par ailleurs, obligatoire que cet élément de support soit solidaire du cadre, même si cela permet d'optimiser le fonctionnement, notamment vis-à-vis des jeux éventuels. Cependant, on peut imaginer qu'il soit uniquement solidaire de la carrosserie.

## Revendications

1. Fenêtre pour véhicule automobile, comprenant au moins un panneau mobile (13) monté coulissant de façon à pouvoir obturer ou libérer une ouverture (12),
**caractérisée en ce qu'**elle comprend des moyens anti-basculement dudit panneau mobile (13) lorsque ce dernier est en position extrême, comprenant au moins un élément d'appui (23) solidaire dudit panneau mobile (13), prévu pour venir en appui sur au moins un élément de support (24) solidaire d'un élément fixe dudit véhicule, dans ladite position ouverte extrême.

2. Fenêtre selon la revendication 1, **caractérisée en ce que** ledit élément d'appui s'étend sensiblement parallèlement à l'axe de coulissement dudit panneau mobile (13).

3. Fenêtre selon l'une quelconque des revendications 1 et 2, **caractérisée en ce qu'**elle comprend deux rails de coulissement, un rail supérieur et un rail inférieur, et **en ce que** ledit élément de support (24) s'étend sensiblement dans le prolongement dudit rail inférieur.

4. Fenêtre selon l'une quelconque des revendications 1 à 3, **caractérisée en ce que** ledit élément d'appui (23) et/ou ledit élément de support (24) comprend un bord d'attaque (31) profilé de façon à compenser un jeu éventuel, au moment ou ledit élément d'appui (23) et ledit élément de support (24) viennent en contact.

5. Fenêtre selon la revendication 4, **caractérisée en ce que** ledit bord d'attaque (31)présente un profil biseauté ou incurvé.

6. Fenêtre selon l'une quelconque des revendications 1 à 5, **caractérisée en ce qu'**elle comprend un cadre de liaison avec ledit véhicule, et **en ce que** ledit élément de support (24) est une extension dudit cadre de liaison.

7. Fenêtre selon l'une quelconque des revendications 1 à 6, **caractérisée en ce que** ledit élément de support (24) forme une glissière pour ledit élément d'appui (23).

8. Fenêtre selon l'une quelconque des revendications 1 à 7, **caractérisée en ce qu'**elle est affleurante avec la carrosserie dudit véhicule, en position fermée, et décalée vers l'extérieur dudit véhicule pour coulisser et prendre ladite position ouverte extrême.

9. Porte de véhicule automobile, **caractérisée en ce qu'**elle comprend une fenêtre comprenant au moins un panneau mobile (13) monté coulissant de façon à pouvoir obturer ou libérer ladite ouverture (12),
**caractérisée en ce que** ladite fenêtre comprend des moyens anti-basculement dudit panneau mobile (13) lorsque ce dernier est en position extrême, comprenant au moins un élément d'appui (23) solidaire dudit panneau mobile (13), prévu pour venir en appui sur au moins un élément de support (24) solidaire d'un élément fixe dudit véhicule, dans ladite position ouverte extrême.

10. Véhicule automobile, **caractérisé en ce qu'**il comprend au moins une fenêtre comprenant au moins un panneau mobile (13) monté coulissant de façon à pouvoir obturer ou libérer une ouverture (12),
**caractérisé en ce qu'**au moins une desdites fenêtres comprend des moyens anti-basculement dudit panneau mobile (13) lorsque ce dernier est en position extrême, comprenant au moins un élément d'appui (23) solidaire dudit panneau mobile (13), prévu pour venir en appui sur au moins un élément de support (24) solidaire d'un élément fixe dudit véhicule, dans ladite position ouverte extrême.

11. Procédé de montage d'une fenêtre selon l'une quelconque des revendications 1 à 8 sur un véhicule automobile, **caractérisé en ce qu'**il comprend les étapes suivantes :
- assemblage de ladite fenêtre, comprenant la solidarisation dudit élément d'appui (23) et d'un cadre audit panneau mobile (13) ;
- montage de ladite fenêtre sur une baie dudit véhicule, par solidarisation dudit cadre audit véhicule.

12. Procédé de montage selon la revendication 11, **caractérisé en ce qu'**il comprend une étape de solidarisation d'au moins une extrémité dudit élément de support (24) à un élément de la carrosserie ou d'une porte dudit véhicule.
